Europäisches Patentamt

European Patent Office

Office européen des brevets

(19)

(11) Publication number: **0 051 905**
**A2**

(12) # EUROPEAN PATENT APPLICATION

(21) Application number: **81300704.4**

(51) Int. Cl.³: **G 06 F 13/00**

(22) Date of filing: **19.02.81**

(30) Priority: **06.11.80 GB 8035735**

(71) Applicant: **British Gas Corporation, Rivermill House 152 Grosvenor Road, London SW1V 3JL (GB)**

(43) Date of publication of application: **19.05.82 Bulletin 82/20**

(72) Inventor: **Jones, Gregory Ernest, 27 Green Lane, Shirley Solihull West Midlands (GB)**

(74) Representative: **Wallace, Walter, British Gas Corporation Patents Department 326 High Holborn, London, WC1V 7PT (GB)**

(84) Designated Contracting States: **BE DE FR IT NL**

(54) **Microprocessor-based control system.**

(57) In order to prevent indeterminate operation of a microprocessor-based control system when a nonexistent address is called, the data lines are strapped to high level or low level lines by impedance elements whose impendance is high in comparison with the load loaded impedance of the lines and low in comparison with the non-loaded impedance.

ACTORUM AG

## Description

This invention relates to computer-based control systems and, in particular to computer-based control systems for fuel burners.

Typically a microcomputer control system includes a central processing unit (CPU) which is usually a silicon chip incorporating data storage registers and processing and control elements, blocks of memory for program data storage and in/out ports for communication with peripheral devices.

Information within a processing system can be divided into two types, instructions and data. Instructions are further subdivided into fields, an operation code and operands. In an eight-bit microprocessor, as is frequently used for control applications, the operation code occupies one byte (eight bits) and the data to be manipulated is also handled in eight-bit bytes. Operands, particularly if addresses may be sixteen bits long. The various components of a micro-processor control system are interconnected by a data bus (which allows two-way flow of data and instructions) and an address bus (which permits the microprocessor to send out the address of the data or instruction that is required). The microprocessor, under program control, can retrieve data and instructions from memory by placing the appropriate address on the address bus and by retrieving the corresponding data from the data bus. It can also store information in the appropriate section of memory by outputting the address and data on the respective buses. If, due to a hardware malfunction or a software error, a microprocessor attempts to read and execute code from an address which is outside the computer's existent memory and, as a result, the data bus lines are not brought to a defined state by the memory being addressed, then the outcome of the instruction will be indeterminate. since there is no memory location corresponding to the called address.

In order to prevent the system performing in an undefined way and to ensure safe operation, a method has been devised to bring. the data bus to a defined state when it is not loaded.

Accordingly the present invention provides a computer-based control system including a microprocessor, a memory having a plurality of storage locations each characterised by a unique address and at least one port connectable to a peripheral device, said microprocessor, said memory and said port being connected to a multiline address bus and to a multiline data bus wherein there is connected from each line of said data bus to either a high-voltage level supply line or to a low-voltage level supply line an impedance element whose impedance is low in comparison with the non-loaded impedance of the line and high in comparison with its loaded impedance.

An embodiment of the invention will now be described by way of example with reference to the accompanying drawings in which:-

Figure 1 shows in schematic form a conventional microprocessor control system

Figure 2 shows the architecture of a typical eight-bit microprocessor as is common in the art; and

Figure 3 shows an arrangement of resistors for loading a data bus in accordance with a specific embodiment of the invention.

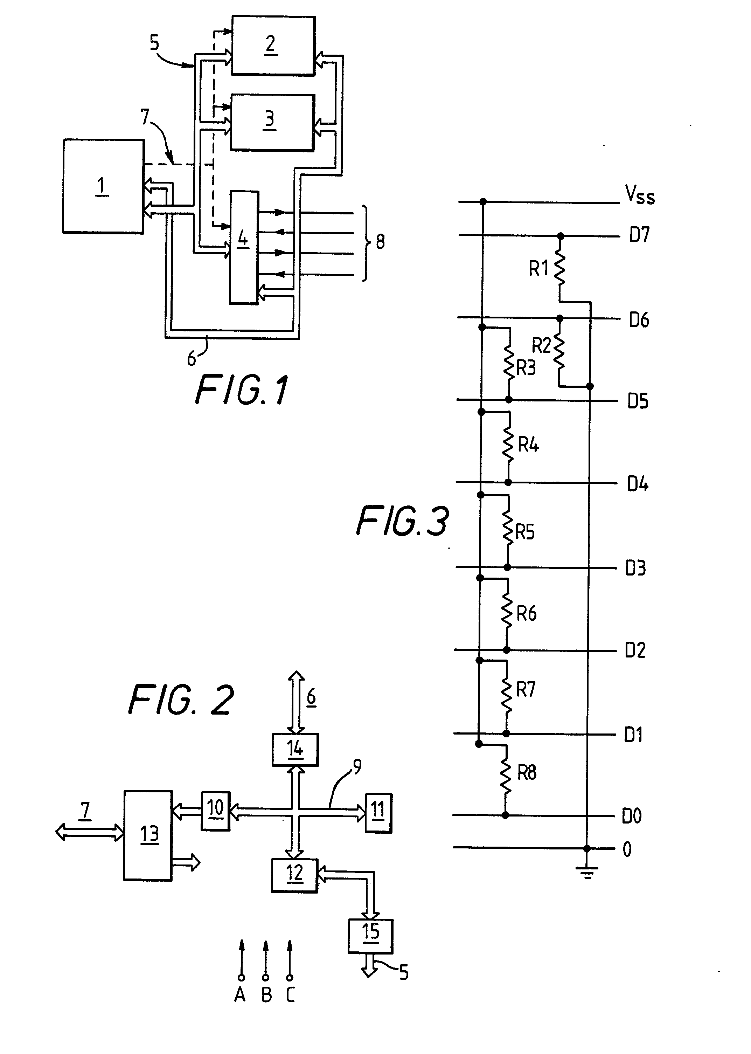

Referring now to Figure 1 of the drawings, a microprocessor control system comprises a microprocessor 1, a block of random-access memory (RAM) 2, a block of read-only memory (ROM) 3 and one or more in/out ports 4. Under program control the microprocessor can retrieve data and instructions from memory by placing the appropriate address on the address bus 5 and by receiving the stored information along a data bus 6. It can also store information in the RAM section of memory by outputting the appropriate address and the data to be stored on the respective buses. The system components are also connected to a control bus 7. Peripheral devices can be addressed through external lines 8 which are interfaced by in/out ports 4.

The architecture of a typical microprocessor is illustrated in Figure 2. An internal data bus interconnects an instructions register 10, an arithmetic logic unit 11 and CPU registers 12, whilst control buffers 13,14,15 are provided for the control, data and address buses. A control bus 7, data bus 8 and an address bus 6 provide the connections to external hardware. Direct current power supplies and system synchronisation are provided by a high-level supply line (typically 5V), an earth line and an external clock A,B,C. The address bus has sixteen tristate outputs which can be wired to external memory devices within the system. A sixteen-bit address bus may address 65,536 ($2^{16}$) locations, some of which are under system control (RAM) whilst others are pre-programmed to perform such functions as system monitor or high level language interpreter or compiler. A particular address may be allocated to control a specified external device such as a modem or it may simply refer to an in/out port or it may have no firm connection. The data bus has eight tristate connections which can serve as both input or output under CPU control. These leads transfer data to and from memory under the control of the system clock. Any number of devices may be connected to the data bus provided they are adequately buffered.

In a control system which is designed to be intrinsically safe such as a fuel burner control system, it is essential that, in the event of failure of some part, the system be brought to a defined safe state. If the microprocessor attempts to address a nonexistent location, the state of the data bus will be indeterminate. In order to prevent this happening an arrangement such as is shown in Figure 3 may conveniently be adopted. With the embodiment shown, resistors R1-R8 are connected from individual data lines D0-D7 to either the high supply rail $V_{ss}$ or to earth 0. The resistance of the resistors is such that they present an impedance which is low compared with the open-circuit impedance of the line and high compared with its loaded impedance. In this way, the line fails to a predetermined code which may be utilised to initiate a shut-down or fault-finding routine.

It is not essential that resistive links be provided between the data lines and the supply rail or earth. Alternatively switching devices such as field effect transistors may be employed to provide a dynamic fail-safe system whose failure code may be set at will or under system control to provide graceful degradation rather than hard failure.

## Claims

1. A computer-based control system including a microprocessor, a memory having a plurality of storage locations each characterised by a unique address, and at least one port connectable to a peripheral device, said microprocessor, said memory and said port being connected to a multiline address bus and to a multiline data bus wherein there is connected from each line of said data bus to either a high-voltage level supply line or to a low-voltage level supply line an impedance element whose impedance is low in comparison with the non-loaded impedance of the line and high in comparison with its loaded impedance.

2. A computer-based control system as claimed in claim 1 wherein said impedance elements are resistors.

3. A computer-based control system as claimed in claim 1 wherein the impedance of said impedance elements is variable.

4. A computer-based control system as claimed in claim 3 wherein each of said data lines has an impedance element connectable to both of a high-voltage level supply and a low-voltage level supply.

5. A computer-based control system as claimed in claim 4 wherein said impedance elements are switchable so that the respective data line may be made high-going or low-going.

6. A computer-based control system substantially as herein described with reference to and as shown in Figure 3 of the accompanying drawings.

0051905

1/1

FIG.1

FIG.2

FIG.3